# EUROPÄISCHE PATENTSCHRIFT

(11) **EP 1 285 720 B1**
(45) Veröffentlichungstag und Bekanntmachung des Hinweises auf die Patenterteilung: **27.02.2008**
(21) Anmeldenummer: 02018453.7
(22) Anmeldetag: 16.08.2002
(51) Int. Cl.: B23Q 1/28, B23Q 1/48, B23Q 1/62

(54) **Radialbohrmaschine**
Radial drilling machine
Perceuse radiale

(30) Priorität: 22.08.2001 DE 10141164
(43) Veröffentlichungstag der Anmeldung: 26.02.2003
(73) Patentinhaber: Mayer, Helmut K., 72766 Reutlingen (DE)
(72) Erfinder: Mayer, Helmut K., 72766 Reutlingen (DE)
(74) Vertreter: Munk, Ludwig

(56) Entgegenhaltungen:
- WO-A-90/14521
- DE-B- 1 208 976
- US-A- 4 386 544
- US-A- 4 829 861

## Beschreibung

Die Erfindung betrifft eine Radialbohrmaschine, insbesondere eine Schnellradialbohrmaschine, mit einem einen Spindelkopf tragenden Ausleger, der verschiebbar auf einem Kreuzkopf aufgenommen ist, der drehbar auf einer stehend angeordneten, vorzugsweise heb- und senkbaren Säule gelagert und mittels einer durch in gegenseitigen Eingriff bringbare Bremsorgane gebildeten Blockiereinrichtung in Drehrichtung abbremsbar und gegenüber der Säule blockierbar ist.

Eine Anordnung dieser Art ist aus der DE 12 08 976B bekannt. Bei dieser bekannten Anordnung ist die Blockiereinrichtung als Backenbremse ausgebildet, die eine an den Umfang eines am oberen Ende der Säule vorgesehenen Flansches anstellbare Bremsbacke enthält. Beim Auftreten großer Schnittkräfte besteht hierbei die Gefahr, dass die mittels der bekannten Backenbremse erzielbare Blockierwirkung nicht ausreicht, um das durch die Schnittkräfte verursachte, auf den Ausleger wirkende Drehmoment zuverlässig abzufangen. Es besteht daher die Gefahr, dass das Bohrloch unrund wird. Dieser Nachteil wird dadurch noch verstärkt, dass bei der bekannten Anordnung die in gegenseitigen Eingriff bringbaren Bremsorgane mit metallischen Oberflächen aneinander anliegen. Da die Blockiereinrichtung auch zum Abbremsen der Drehbewegung beim Anfahren einer Bohrposition dient, besteht auch die Gefahr eines vergleichsweise großen Abriebs im Bereich der metallischen Materialpaarung, was zu einem schnellen Verschleiß führt.

Die US-A 4829 861 zeigt einen Spindelstock mit einer dem Antriebsrad zugeordneten Scheibenbremse. Diese enthält eine mit dem Antriebsrad verbundene Bremsscheibe, die in einen auf dem Maschinengestell angebrachten Bremssattel eingreift. Auch hier ergibt sich daher eine punktuelle Einleitung der Bremskraft.

Hiervon ausgehend ist es daher die Aufgabe der vorliegenden Erfindung, eine Radialbohrmaschine eingangs erwähnter Art mit einfachen und kostengünstigen Mitteln so zu verbessern, dass bei kompakter Bauweise eine hohe Bohrgenauigkeit und Zuverlässigkeit erreicht werden.

Diese Aufgabe wird erfindungsgemäß durch die Merkmale des Anspruchs 1 gelöst.

Mit diesen Maßnahmen lassen sich die Nachteile des gattungsgemäßen Standes der Technik vermeiden. Durch den Bremsbelag wird der Reibungskoeffizient erhöht, so dass in vorteilhafter Weise bereits vergleichsweise geringe Anpresskräfte ausreichen, um eine wirksame Bremsung bzw. zuverlässige Blockierung zu erreichen, was sich vorteilhaft auf die erzielbare Genauigkeit und Lebensdauer auswirkt. Dieser Vorteil wird dadurch noch verstärkt, dass der Ringkolben eine vergleichsweise große Anpressfläche aufweist, was zu einer geringen Flächenpressung und damit zu einer schonenden Betriebsweise führt. Hinzu kommt, dass die gegenseitigen Anpresskräfte zwischen Ringkolben und Bremsscheibe in axialer Richtung verlaufen, in der eine ausreichende Steifigkeit vergleichsweise einfach bewerkstelligt werden kann, was sich ebenfalls vorteilhaft auf die Erzielung hoher Brems- und Blockierkräfte auswirkt.

Vorteilhafte Ausgestaltungen und zweckmäßige Fortbildungen der übergeordneten Maßnahmen sind in den Unteransprüchen angegeben.

Vorteilhaft können die Bremsscheibe der Säule und der das andere Bremsorgan bildende Ringkolben dem Kreuzkopf zugeordnet sein. Dies ermöglicht eine sehr kompakte und stabile Bauweise.

Zweckmäßig kann der Ringkolben mit einem Bremsbelag versehen sein. Die Bremsscheibe kann dabei in vorteilhafter Weise als einfache, vergleichsweise dünne Stahlscheibe ausgebildet sein, was den Vorteil der kompakten Bauweise noch verstärkt.

Eine weitere vorteilhafte Maßnahme kann darin bestehen, dass die Bremsscheibe mit ihrem radial inneren, einen Kragen der Säule umfassenden Randbereich an der Säule befestigt ist und mit ihrem radial äußeren Randbereich auf einem umlaufenden, dem das in axialer Richtung verschiebbare Bremsorgan bildenden, kreuzkopfseitig vorgesehenen Ringkolben gegenüberliegend angeordneten, ebenfalls am Kreuzkopf angebrachten Gegenhalteorgan aufliegt. Der Ringkolben und das Gegenhalteorgan bilden dabei einen Klemmspalt, in den die zweckmäßig aus einem dünnen Stahlblech bestehende Bremsscheibe mit ihrem äußeren Umfangsbereich hineinragen kann. Die Bremsscheibe wird dementsprechend bei der Betätigung des Bremsorgans beidseitig geklemmt. Die Abstützung der Bremsscheibe durch das Gegenhalteorgan stellt sicher, dass die Bremsscheibe auch keine axialen Biegekräfte aufnehmen muss.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Seitenansicht einer manuell bedienbaren Schnellradialbohrmaschine und
- Figur 2: einen Schnitt durch das obere Ende der Hubsäule samt hierauf gelagerten Kreuzkopf der Anordnung gemäß Figur 1.

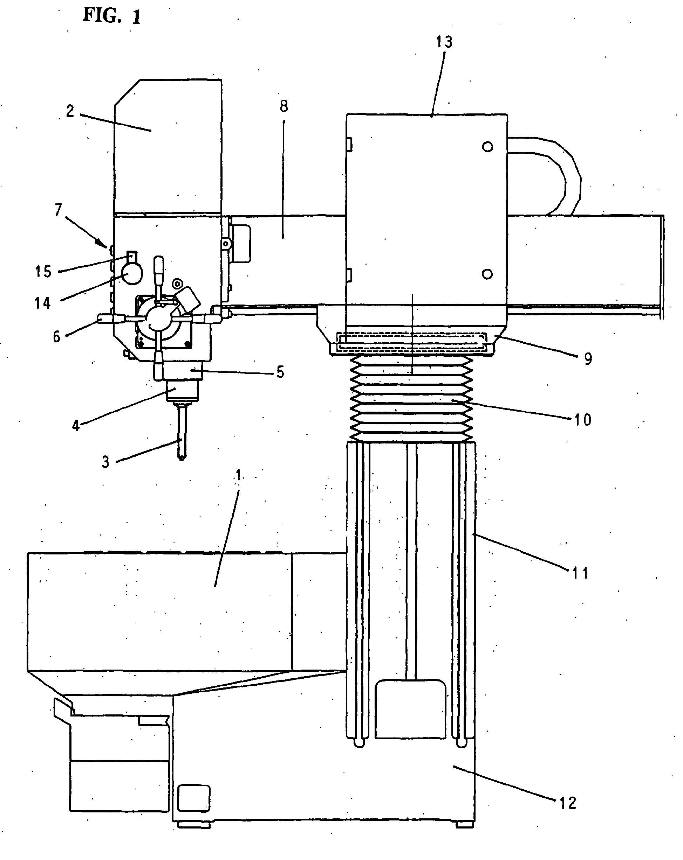

Die in Figur 1 gezeigte Schnellradialbohrmaschine enthält einen über einem Werkstückaufnahmetisch 1 angeordneten Spindelkopf 2, der eine an ihrem unteren Ende ein Spannfutter zur Aufnahme eines hier durch einen Bohrer gebildeten Werkzeugs 3 tragende, antreibbare Spindel 4 enthält, die in einer in vertikaler Richtung bewegbar auf dem Spindelkopf 2 aufgenommenen Pinole 5 gelagert ist. Diese ist mittels eines Handkreuzes 6 aus- und einfahrbar. Im Bereich der Frontseite des Spindelkopfes 2 ist ein Bedienpult 7 zum Einstellen bestimmter Parameter, wie Antriebsgeschwindigkeit, Höhenposition und dergl., sowie zum Aktivieren und Passivieren der zugeordneten Antriebseinrichtung vorgesehen.

Der Spindelkopf 2 ist am vorderen Ende eines Auslegers 8 angebracht, der in seiner Längsrichtung verschiebbar auf einem Kreuzkopf 9 aufgenommen ist, der seinerseits um eine vertikale Achse drehbar auf einer mit stehender Achse angeordneten, vertikalen Hubsäule 10 gelagert ist, die in vertikaler Richtung verschiebbar in einem hinter dem Werkstückaufnahmetisch 1 angeordneten Ständer 11 des den Tisch 1 aufnehmenden Maschinengestellts 12 aufgenommen und mittels einer auf dem Gestell 12 aufgenommenen Antriebseinrichtung heb- und senkbar ist. Der Kreuzkopf 9 trägt auch einen Schaltschrank 13, der in Form eines vom Ausleger 8 durchgriffenen Tunnels ausgebildet sein kann.

Durch Betätigung der der Hubsäule 10 zugeordneten Antriebseinrichtung wird der Spindelkopf 2 auf die gewünschte Höhe gebracht. Die Bohrposition wird durch Schwenken und Verfahren des Auslegers 8 angefahren. Hierzu ist auf der dem Handkreuz 6 gegenüberliegenden Seite des Spindelkopfes 2 ein Führungsgriff 14 angebracht. Dieser ist mit einem Betätigungsknopf 15 zum Betätigen einer weiter unten noch ausführlich zu beschreibenden Blockiereinrichtung zum Blockieren der Schwenkbewegung versehen.

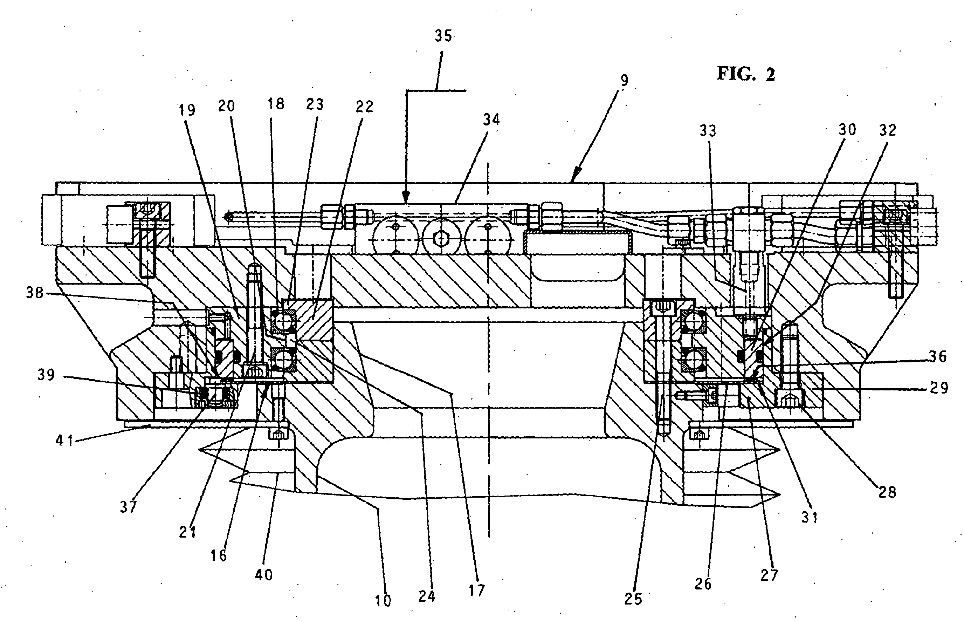

Die Hubsäule 10 ist, wie Figur 2 anschaulich zeigt, im Bereich ihres oberen Endes mit einem durch eine umlaufende Schulter 16 begrenzten Kragen 17 versehen, der als Lagerzapfen für den Kreuzkopf 9 fungiert. Zur Lagerung des Kreuzkopfes 9 sind zwei axial gegeneinander versetzte, am Kreuzkopf 9 und an der Hubsäule 10 abgestützte Lager 18 vorgesehen. Diese sind hier zweckmäßig als Schrägkugellager ausgebildet, die in Form einer sogenannten O-Lagerung angeordnet sind, die Radial- und Axialkräfte aufnehmen kann und praktisch spielfrei ist, so dass auf den Ausleger 8 wirkende Hubkräfte zu keiner nennenswerten Aufbäumung führen können.

Die Lager 18 stützen sich an mit dem Kreuzkopf 9 bzw. der Hubsäule 10 verbundenen Ringanordnungen ab. In den Kreuzkopf 9 ist ein die Lager 18 umfassender Ring 19 eingebaut, der einen nach radial innen vorspringenden, mittleren Flansch 20 aufweist, so dass sich zwei seitlich offene Randnuten ergeben, in die die Lager 18 mit ihrem radial äußeren Umfangsbereich eingesetzt sind. Die radial äußeren Bereiche der einander zugewandten Seitenflanken der Lager 18 sitzen dabei auf dem mittleren Flansch 20 auf, wodurch die beiden Lager 20 zuverlässig distanziert werden. Der die Lager 18 radial außen umfassende Ring 19 ist durch Schrauben 21 am Kreuzkopf 9 befestigt.

Dem Ring 19 gegenüber liegend ist eine auf dem Kragen 17 der Hubsäule 10 aufgenommene Doppelringanordnung mit zwei axial aneinander anliegenden Ringen 22 vorgesehen. Diese sind jeweils an ihrem Außenumfang mit einer an der einander zugewandten Seite offenen und an der voneinander abgewandten Seite durch einen Randflansch 23 begrenzten Nut versehen, so dass sich eine gemeinsame, seitlich durch die Randflansche 23 begrenzte Nut 24 ergibt. In diese greifen die Lager 18 mit ihren radial inneren Umfangsbereichen ein, wobei die radial inneren Bereich der voneinander abgewandten Seitenflanken an den Randflanschen 23 anliegen. Die durch die Ringe 22 gebildete Doppelringanordnung ist mittels achsparalleler Schrauben 25 mit der Schulter 16 verspannt. Diese befindet sich etwas unterhalb der zugewandten Stirnseite des kreuzkopfseitig befestigten Rings 19, so dass sich keine Berührung ergibt.

Zur Bildung der oben bereits erwähnten Blockiereinrichtung, durch die der Kreuzkopf 9 gegenüber der Hubsäule 10 in Drehrichtung abbremsbar und blockierbar ist, ist eine an der Hubsäule 10 befestigte, in radialer Richtung über die Schulter 16 hinausragende, ein erstes Bremsorgan bildende Bremsscheibe 26 vorgesehen, die mit einem zugeordneten, auf dem Kreuzkopf 9 aufgenommenen, zweiten Bremsorgan zusammenwirkt.

Die Bremsscheibe 26 ist als den Kragen 17 umfassender Ring ausgebildet, dessen radial innerer Umfangsbereich zwischen der Schulter 16 und der gegenüber dieser verspannten, durch die Ringe 22 gebildeten Doppelringanordnung eingespannt ist, wobei die zur Befestigung der Doppelringanordnung vorgesehenen Schrauben 25 auch den inneren Randbereich der Bremsscheibe 26 durchgreifen.

Der radial äußere Randbereich der Bremsscheibe 26 übergreift einen am Kreuzkopf 9 angebrachten Stützflansch 27. Dieser ist an einen umlaufenden, durch Schrauben 28 am Kreuzkopf 9 befestigten Ring 29 angeformt. Die der Bremsscheibe 26 zugewandte Oberseite des Stützflansches 27 befindet sich auf dem Niveau der die Bremsscheibe 26 aufnehmenden Schulter 16 oder liegt vorzugsweise um ein geringes Laufspiel tiefer.

Die Bremsscheibe 26, die aus einem vergleichsweise dünnen Stahlblech bestehen kann, ist durch ein dem Stützflansch 27 gegenüberliegendes, kreuzkopfseitiges Bremsorgan 30 eventuell entgegen seiner axialen Federwirkung an die zugewandte Oberfläche des Stützflansches 27 anpressbar. Der Stützflansch 27 fungiert dementsprechend als dem Bremsorgan 30 zugeordnetes Gegenhalteorgan. Zwischen dem Bremsorgan 30 und dem durch den Stützflansch 27 gebildeten Gegenhalteorgan ergibt sich praktisch ein Klemmspalt 31, in den die Bremsscheibe 26 mit ihrem äußeren Umfangsbereich hineinanragt. Die Bremsscheibe 26 wird dementsprechend bei Betätigung des Bremsorgans 30 beidseitig geklemmt.

Das vorstehend genannte, kreuzkopfseitig vorgesehene Bremsorgan 30 ist als in einen durch eine umlaufende Nut 32 des am Kreuzkopf 9 befestigten, den Lagern 18 zugeordneten Rings 19 angeordneter Ringkolben ausgebildet, der hydraulisch betätigbar ist. Hierzu ist die Rückseite des den Ringkolben aufnehmenden Ringraums über zugeordnete Hydraulikleitungen 33 mit einer Druckquelle, hier in Form einer auf dem kreuzkopf 9 angeordneten Hydraulikpumpe 34 verbunden, die mittels des oben erwähnten Schaltknopfes 15 des Führungsgriffs 14 aktivierbar bzw. passivierbar ist, wie in Figur 2 durch eine Signalleitung 35 angedeutet ist. Durch Aktivieren der Druckquelle 34 wird der das Bremsorgan 30 bildende Ringkolben nach unten bewegt, wodurch die Bremsscheibe 26 geklemmt wird.

Der Innendurchmesser des das Bremsorgan 30 bildenden Ringkolbens ist kleiner als der Außendurchmesser der Bremsscheibe 26. Der Außendurchmesser des genannten Ringkolbens ist dagegen größer als der Außendurchmesser der Bremsscheibe 26. Diese kommt dementsprechend nur mit einem radial inneren Bereich der zugewandten Stirnfläche des das Bremsorgan 30 bildenden Ringkolbens zum Eingriff. Zumindest dieser mit der Bremsscheibe 26 zum Eingriff kommende, radial innere Teilbereich der unteren Stirnseite des das Bremsorgan 30 bildenden Ringkolbens ist mit einem Bremsbelag 36 versehen. Dieser ist zweckmäßig als durch einen Härter gehärteter Harzbelag ausgebildet. Durch den Bremsbelag 36 wird der Reibungskoeffizient erhöht, so dass bereits mit vergleichsweise geringen Anpresskräften hohe Reibkräfte erzielbar sind.

Der das Bremsorgan 30 bildende Ringkolben ist als einfachwirkender Kolben ausgebildet, der hydraulisch vorschiebbar ist. Zur Bewerkstelligung einer Rückstellbewegung sind in den als Gegenhalteorgan fungierenden Stützflansch 27 mehrere, über den Umfang verteilte Rückstellkolben 37 eingebaut, durch die der das Bremsorgan 30 bildende Ringkolben von der Bremsscheibe 26 abhebbar ist, wodurch diese gleichzeitig von der zugewandten Stützfläche des als Gegenhalteorgan fungierenden Stützflansches 27 frei kommt, d.h. mit diesem zumindest einen Spalt geringer Breite bildet. Die Rückstellkolben 37 sind radial außerhalb der Bremsscheibe 26 positioniert, so dass sie nur mit dem die Bremsscheibe 26 in radialer Richtung überragenden Bereich der vorderen Stirnseite des das Bremsorgan 30 bildenden Ringkolbens zum Eingriff kommen und Kollisionen mit der Bremsscheibe 26 unterbleiben.

Der das Bremsorgan 30 bildende Ringkolben ist im Bereich seiner unteren Stirnseite mit den Rückstellkolben 37 zugeordneten Randausnehmungen 38 versehen. Diese können als Randausnehmungen des über die ganze untere Ringkolbenstirnseite sich erstreckenden Bremsbelags 36 ausgebildet sein. Die Rückstellkolben 37 werden durch ein zugeordnetes Tellerfederpaket 39 stets in Anlage am das Bremsorgan 30 bildenden Ringkolben und dementsprechend im Eingriff mit den dortigen Randausnehmungen 38 gehalten. Bei Druckbeaufschlagung des das Bremsorgan 30 bildenden Ringkolbens werden die Rückstellkolben 37 unter Beibehaltung der genannten Anlage entgegen der Wirkung des Tellerfederpakets 39 niedergedrückt. Die Rückstellkolben 37 bewerkstelligen dementsprechend nicht nur eine Rückführung des druckentlasteten Bremsorgans 30 in die Ausgangsposition, sondern auch eine Fixierung des das Bremsorgan 30 bildenden Ringkolbens in Umfangsrichtung.

Die Hubsäule 10 ist innerhalb eines Faltenbalgs 40 angeordnet, der an seinem oberen und unteren Ende an einem Abdeckring 41 angebracht ist. Der obere Abdeckring 41 ist, wie aus Figur 2 ersichtlich ist, an die Unterseite eines die Stufe 16 bildenden Flansches der Hubsäule 10 angeschraubt und liegt streifend an der Unterseite einer radial äußeren, umlaufenden Wand des Kreuzkopfes 9 an, so dass die Kreuzkopflagerung und die Blockiereinrichtung gegen Verschmutzung geschützt sind.

Beim Anfahren einer Bohrposition ergreift die Bedienungsperson mit einer Hand den Führungsgriff 14 und kann hiermit das Werkzeug 3 durch Verfahren und Schwenken des Auslegers 8 in die gewünschte Position bringen. Kurz vor Erreichen dieser Position wird der Schaltknopf 15 betätigt, wodurch die oben beschriebene Blockiereinrichtung betätigt wird. Dadurch werden die Bewegung des Auslegers 8 in ihrer letzten Phase abgebremst und dann der Ausleger 8 fixiert. Die Abbremsphase umfasst dabei den Zeitraum bis zum vollständigen Aufbau der maximalen Anpresskräfte.

## Patentansprüche

1. Radialbohrmaschine, insbesondere Schnellradialbohrmaschine, mit einem einen Spindelkopf (2) tragenden Ausleger (8), der verschiebbar auf einem Kreuzkopf (9) aufgenommen ist, der drehbar auf einer stehend angeordneten, vorzugsweise heb- und senkbaren Säule (10) gelagert und mittels einer durch in gegenseitigen Eingriff bringbare Bremsorgane gebildeten Blockiereinrichtung in Drehrichtung abbremsbar und gegenüber der Säule (10) blockierbar ist, **dadurch gekennzeichnet, dass** wenigstens eines der in gegenseitigen Eingriff bringbaren Bremsorgane mit einem dem jeweils anderen Organ zugewandten Bremsbelag (36) versehen ist und dass ein Bremsorgan als zur Achse der Säule (10) radiale Bremsscheibe (26) und das andere Bremsorgan (30) als umlaufender hydraulisch betätigbarer Ringkolben ausgebildet ist und jedes Bremsorgan auf jeweils einer der gegeneinander blockierbaren Baugruppen aufgenommen ist, wobei die Bremsscheibe (26) mit einem Randbereich an ihrer zugeordneten Baugruppe verdrehsicher befestigt ist und wobei dem das andere Bremsorgan (30) bildenden, hydraulisch betätigbaren Ringkolben, der mit dem freien Randbereich der Bremsscheibe (26) in axialer Richtung zum Eingriff bringbar ist, eine auf der zugehörigen Baugruppe aufgenommene Rückstell- und Fixiereinrichtung zugeordnet ist.

2. Radialbohrmaschine nach Anspruch 1, **dadurch gekennzeichnet, dass** der das mit der Bremsscheibe (26) zum Eingriff bringbare Bremsorgan (30) bildende Ringkolben mit einem der Bremsscheibe (26) zugewandten Bremsbelag (36) versehen ist.

3. Radialbohrmaschine nach einem der vorhergehenden Ansprüche, **dadurch gekennzeichnet, dass** der Bremsbelag (36) als mittels eines Härters gehärteter Harzbelag ausgebildet ist.

4. Radialbohrmaschine nach einem der vorhergehenden Ansprüche, **dadurch gekennzeichnet, dass** die Bremsscheibe (26) der Säule (10) und der das andere Bremsorgan (30) bildende Ringkolben dem Kreuzkopf (9) zugeordnet sind.

5. Radialbohrmaschine nach Anspruch 4, **dadurch gekennzeichnet, dass** die Bremsscheibe (26) mit ihrem radial inneren, einen Kragen (17) der Säule (10) umfassenden Randbereich an der Säule (10) befestigt ist und mit ihrem radial äußeren Randbereich auf einem umlaufenden, dem das in axialer Richtung verschiebbare Bremsorgan (30) bildendem, kreuzkopfseitig vorgesehenem Ringkolben gegenüberliegend angeordneten, ebenfalls am Kreuzkopf (9) angebrachten Gegenhalteorgan (27) aufliegt.

6. Radialborhmaschine nach einem der vorhergehenden Ansprüche, **dadurch gekennzeichnet, dass** die Bremsscheibe (26) aus einem dünnen Stahlblech besteht.

7. Radialbohrmaschine nach einem der vorhergehenden Ansprüche 4 - 6, **dadurch gekennzeichnet, dass** der radial innere, auf einer Schulter (16) der Säule (10) aufgenommene Randbereich der Bremsscheibe (26) eine mit der Schulter (16) verspannte Ringanordnung (22) untergreift, an der dem Kreuzkopf (9) zugeordnete Lager (18) abgestützt sind.

8. Radialbohrmaschine nach Anspruch 7, **dadurch gekennzeichnet, dass** zwei vorzugsweise als Schrägkugellager ausgebildete Lager (18) vorgesehen sind, die mit den radial äußeren Bereichen ihrer einander zugewandten Seitenflanken auf einem radial inneren Flansch (20) eines sie umfassenden, kreuzkopfseitig vorgesehenen Rings (19) aufsitzen und die mit den radial inneren Bereichen ihrer voneinander abgewandten Seitenflanken an eine Nut (24) begrenzenden, seitlichen Randflanschen (23) der an der Säule (10) befestigten Ringanordnung (22) anliegen, die von der Bremsscheibe (26) untergriffen und mittels die Bremsscheibe (26) durchgreifender Schrauben (25) mit der zugeordneten Schulter (16) der Säule (10) verspannbar ist.

9. Radialbohrmaschine nach einem der vorhergehenden Ansprüche, **dadurch gekennzeichnet, dass** der das kreuzkopfseitig vorgesehene Bremsorgan (30) bildende Ringkolben auf dem die Lager (18) umfassenden, kreuzkopfseitig befestigten Ring (19) aufgenommen ist.

10. Radialbohrmaschine nach einem der vorhergehenden Ansprüche, **dadurch gekennzeichnet, dass** die den Rückstellkolben (38) zugeordnete Federanordnung jeweils als Tellerfederpaket ausgebildet ist.

## Claims

1. A radial drilling machine in particular a high-speed radial drilling machine comprising a cantilever (8) holding a spindle head (2) which is slidably mounted on a cross head (9) which in turn is rotatably provided on a vertical column (10) which can preferably be raised and lowered, which cross head (9) can be retarded in direction of its rotation by means of a blocking unit formed by mutually engageable braking elements and can thus be blocked relative to the column (10) **characterised in that** at least one of the mutually engageable braking elements is provided with a brake lining (36) facing the other braking element, and further **in that** one braking element is designed as a brake disc (26) which is provided radially relative to the axis of the column (10), while the other brake element (30) is designed as a circumferential annular piston which can be actuated by hydraulic force, and further **in that** each braking element is accommodated on one of the mutually blockable units, with a rim area of the brake disc (26) being attached to its associated unit in such a way that it is secured against rotary movement, and with such annular piston actuatable by hydraulic force and forming the other brake element (30), which is engageable with the free rim area of the brake disc (26), being associated with a recuperating and fixing arrangement accommodated on the appertaining unit.

2. A radial drilling machine in accordance with Claim 1, **characterised in that** the annular piston forming the brake unit (30), which is engageable with the brake disc (26), is provided with a brake lining (36) facing the brake disc (26).

3. A radial drilling machine in accordance with any of the preceding claims, **characterised in that** the brake lining (36) consists of a resin lining which has been hardened by means of a hardener.

4. A radial drilling machine in accordance with any of the preceding claims, **characterised in that** the brake disc (26) is associated with the column (10) and the annular piston forming the other brake element (30) is associated with the cross head (9).

5. A radial drilling machine in accordance with claim 4, **characterised in that** the brake disc (26) with its radially inner rim area enclosing a collar (17) of the column (10) is attached to the column (10) and with its radially outer rim area rests on a rotatory counter support element (27) which is likewise attached to the cross head (9), which counter support element (27) is provided opposite the annular piston forming the axially movable brake element (30) and provided on the side of the cross head.

6. A radial drilling machine in accordance with any of the preceding claims, **characterised in that** the brake disc (26) consists of thin sheet metal.

7. A radial drilling machine in accordance with any of the preceding claims 4 to 6, **characterised in that** the radially inner rim area of the brake disc (26), which is accommodated on a shoulder (16) of the column (10), extends underneath a ring arrangement (22) which is braced with the shoulder (16), on which ring arrangement (22) the bearings (18), associated with the cross head (9), are supported.

8. A radial drilling machine in accordance with claim 7, **characterised in that** provision is made for two ball bearings (18), preferably designed as angular contact ball bearings whose radially outward areas of their side flanks facing each other rest on a radially inward flange (20) of a ring (19) which encloses the said side flanks and is provided on the cross head side, and whose radially inward areas of their side flanks pointing away from each other rest on lateral rim flanges (23) of the ring arrangement (22) attached to the column (10), such rim flanges (23) limiting a groove (24), with the brake disc (26) extending underneath such ring arrangement (22) and being braceable with the associated shoulder (16) of the column (10) by means of screws (25) extending through the brake disc (26).

9. A radial drilling machine in accordance with any of the preceding claims, **characterised in that** the annular piston forming the brake element (30) provided on the cross head side is accommodated on the ring (19) enclosing the ball bearings (18) and provided on the cross head side.

10. A radial drilling machine in accordance with any of the preceding claims, **characterised in that** the spring arrangement associated with the recuperating pistons (38) is designed as a cup spring package.

## Revendications

1. Perceuse radiale, en particulier perceuse radiale à grande vitesse, avec un avant-bras (8) qui porte un nez de broche (2) et qui est reçu sur un chariot à croix (9) de manière à pouvoir être déplacé, ledit chariot à croix étant logé à rotation sur une colonne (10) disposée debout qui, de préférence, peut être levée et abaissée, et pouvant être freiné dans le sens de rotation et bloqué par rapport à ladite colonne (10) au moyen d'un dispositif de blocage formé par des organes de freinage qui peuvent être mis en prise mutuelle, **caractérisée par le fait que** l'un au moins des organes de freinage qui peuvent être mis en prise mutuelle est muni d'une garniture de frein (36) montrant en direction dudit respectivement autre organe, et qu'un organe de freinage est réalisé comme disque de frein (26) radial par rapport à l'axe de la colonne (10) et l' autre organe de freinage (30) est réalisé en tant que piston annulaire circonférentiel qui peut être actionné hydrauliquement et que chacun des organes de freinage est reçu sur respectivement un des sous-groupes qui peuvent être bloqués les uns par rapport aux autres, le disque de frein (26) étant fixé avec une zone de bord sur son sous-groupe associé de manière à être bloqué en rotation, et un dispositif de rappel et de fixation reçu sur le sous-groupe associé étant associé au piston annulaire qui forme l'autre organe de freinage (30) et peut être actionné hydrauliquement et qui peut être mis en prise dans la direction axiale avec la zone de bord libre du disque de frein (26).

2. Perceuse radiale selon la revendication 1, **caractérisée par le fait que** le piston annulaire formant l'organe de freinage (30) qui peut être mis en prise avec le disque de frein (26) est pourvu d'une garniture de frein (36) montrant vers le disque de frein (26).

3. Perceuse radiale selon l'une des revendications précédentes, **caractérisée par le fait que** ladite garniture de frein (36) est réalisée comme garniture de résine durcie au moyen d'un durcisseur.

4. Perceuse radiale selon l'une des revendications précédentes, **caractérisée par le fait que** le disque de frein (26) de la colonne (10) et le piston annulaire formant l' autre organe de freinage (30) sont associés audit chariot à croix (9).

5. Perceuse radiale selon la revendication 4, **caractérisée par le fait que**, avec sa zone de bord radialement interne entourant un collet (17) de la colonne (10), le disque de frein (26) est fixé sur ladite colonne (10) et, avec sa zone de bord radialement externe, il s'appuie sur un organe circonférentiel de contre-maintien qui est placé en vis-à-vis du piston annulaire prévu du côté du chariot à croix et formant l'organe de freinage (30) déplaçable dans la direction axiale, et qui est monté, lui aussi, sur ledit chariot à croix (9).

6. Perceuse radiale selon l'une des revendications précédentes, **caractérisée par le fait que** le disque de frein (26) est réalisé dans une mince tôle d'acier.

7. Perceuse radiale selon l'une des revendications précédentes 4 à 6, **caractérisée par le fait que** la zone de bord radialement interne du disque de frein (26), qui est reçue sur une épaule (16) de la colonne (10), se prend au-dessous d'un dispositif annulaire (22) qui est serré avec ladite épaule (16) et sur lequel sont appuyés des paliers (18) associés au chariot à croix (9).

8. Perceuse radiale selon la revendication 7, **caractérisée par le fait que** l'on prévoit deux paliers (18), réalisés de préférence en tant que roulements à billes à contact oblique, qui, avec les zones radialement externes de leurs flancs latéraux montrant les uns vers les autres, sont logés sur une bride radialement interne (20) d'un anneau (19) les entourant et prévu du côté du chariot à croix, et qui, avec les zones radialement internes de leurs flancs latéraux montrant dans des directions opposées, s' appuient sur des brides de bord latérales (23) du dispositif annulaire (22) fixé sur la colonne (10) qui délimitent une rainure (24), le disque de frein (26) étant situé sous ledit dispositif annulaire (22) et ce dernier pouvant être serré avec l'épaule (16) associée de la colonne (10) par le biais de vis (25) traversant le disque de frein (26).

9. Perceuse radiale selon l'une des revendications précédentes, **caractérisée par le fait que** le piston annulaire formant l'organe de freinage (30) prévu du côté du chariot à croix est reçu sur l'anneau (19) entourant les paliers (18) et fixé du côté du chariot à croix.

10. Perceuse radiale selon l'une des revendications précédentes, **caractérisée par le fait que** le dispositif formant ressort associé au piston de rappel (38) est réalisé respectivement en tant que bloc-ressort Belleville.
